# EUROPEAN PATENT APPLICATION

(11) **EP 2 105 678 A1**
(43) Date of publication of application: **30.09.2009**
(21) Application number: 08703391.6
(22) Date of filing: 17.01.2008
(51) Int. Cl.: F24F 11/02

(54) **AIR CONDITIONING BLOW OUT PANEL, AIR CONDITIONING CONTROL SYSTEM PROVIDED WITH THE AIR CONDITIONING BLOW OUT PANEL AND AIR CONDITIONING CONTROL METHOD**

(30) Priority: 17.01.2007 JP 2007008567
(71) Applicant: Daikin Industries, Ltd., Osaka 530-8323 (JP)
(72) Inventor: NISHINO, Atsushi, Kusatsu-shi Shiga 525-8526 (JP); HASHIMOTO, Satoshi, Kusatsu-shi Shiga 525-8526 (JP)
(74) Representative: Goddar, Heinz J.
(86) International application number: PCT/JP2008/050536
(87) International publication number: WO 2008/088020

(57) **Abstract**

An air conditioning blow-out panel 10 is provided for achieving both comfortableness and energy saving by effectively conducting airflow control based on sensor information of the entire air conditioning space. The air conditioning blow-out panel 10 is allowed to be attached/detached to/from a main body of an air conditioning indoor unit. The air conditioning blow-out panel 10 includes an airflow regulation mechanism 15, a driving unit 14, a control unit 13 and a network connection unit 12. The airflow regulation mechanism 15 is configured to regulate at least one of the airflow volume and the airflow direction. The driving unit 14 is configured to drive the airflow regulation mechanism. The control unit 13 is configured to drive the driving unit. The network connection unit 12 is connected to a network 2 for obtaining a single or plurality of pieces of sensor information. The network connection unit 12 is configured to receive a control command generated based on the sensor information and transmit it to the control unit 13. Furthermore, the control unit 13 is configured to drive the driving unit 14 based on the control command generated based on the sensor information obtained through the network 2.

## Description

### TECHNICAL FIELD

The present invention relates to an air conditioning blow-out panel configured to be attached to an air conditioning indoor unit, an air conditioning control system including the same and an air conditioning control method.

### BACKGROUND ART

Under the conventional air conditioning situation for a relatively large space (e.g., a shop, a restaurant and an office), an indoor unit uniformly blows out or discharges air through blow-out ports of the indoor unit without considering variation in air conditioning demand depending on heat-load distribution, human distribution and the like in the target space for air conditioning. The uniform air conditioning produces variation in temperature within the target space for air conditioning. In other words, with uniform air conditioning, the target space for air conditioning includes some areas that make a person feel relatively uncomfortable because of draft. Therefore, the uniform air conditioning has a drawback of uncomfortableness.

In this case, airflow control is effective for achieving comfortableness in the target space for air conditioning. For example, a known airflow control technique relates to air conditioning control for switching uniform air conditioning into local air conditioning by conducting air flow control based on information of a high radiation temperature part corresponding to a position of a human body, detected by an infrared sensor and the like (see e.g., Patent Document 1).

### <Patent Document 1>

Japanese Patent No. 3807305 (Specification)

### DISCLOSURE OF THE INVENTION

### <Technical Problem>

According to the aforementioned conventional technique, the blow-out panel of each indoor unit is controlled based on the information from the sensor of the indoor unit. However, it is important to efficiently and accurately obtain sensor information of the entire space for conducting comfortable and economical airflow control in a building or a large space where a plurality of indoor units are installed. Additionally, it is desirable to easily install and change an air conditioning facility in accordance with changes of layouts of peripherals (e.g., personal computers and luminaries) in an indoor space or environmental changes for using the air conditioning facility.

An object of the present invention is to achieve both comfortableness and energy saving in air conditioning by conducting effective airflow control based on sensor information of the entire air conditioning space.

### <Solution to Problem>

An air conditioning blow-out panel according to a first aspect of the present invention is an air conditioning blow-out panel attachable/detachable to/from a main body of an air conditioning indoor unit. The air conditioning blow-out panel includes an airflow regulation mechanism, a driving unit, a control unit and a network connection unit. The airflow regulation mechanism is configured to regulate at least one of an airflow volume and an airflow direction. The driving unit is configured to drive the airflow regulation mechanism. The control unit is configured to drive the driving unit. The network connection unit is connected to a network for obtaining a single or plurality of pieces of sensor information. The network connection unit is configured to receive a control command generated based on the sensor information and transmit the control command to the control unit. Furthermore, the control unit is configured to drive the driving unit in accordance with the control command generated based on the sensor information obtained through the network.

In the air conditioning blow-out panel according to the first aspect of the present invention, the air conditioning blow-out panel is configured to be attachable/detachable to/from the main body of the air conditioning indoor unit directly or through a duct and the like. The airflow regulation mechanism includes a flap, a shutter for opening/closing a blow-out port of the air conditioning blow-out panel, and a mechanism for regulating the airflow volume and the airflow direction. Additionally, the sensor is a sensor for detecting and outputting the number of people in an indoor space, position(s) of a person/people in the indoor space, identification information of a person/people in the indoor space through mobile phone(s) or IC card(s). The sensor may be an infrared sensor, a temperature sensor, a humidity sensor, a CO2 sensor, an airflow direction and volume sensor, and a luminosity sensor, and the like.

The air conditioning blow-out panel according to the first aspect is capable of optimally conducting airflow control by obtaining sensor information including a single or plurality of pieces of sensor information through the network and by driving the airflow regulation mechanism. Accordingly, it is possible to achieve air conditioning control for achieving comfortableness and for enhancing energy saving only by controlling the air conditioning blow-out panel. Furthermore, the air conditioning blow-out panel is attachable/detachable to/from the main body of the air conditioning indoor unit, and the sensor information is allowed to be received through the network. Therefore, it is possible to easily install the air conditioning blow-out panel or rearrange the air conditioning blow-out panel to another air conditioning indoor unit in accordance with layout change of peripheral devices (e.g., personal computers and luminaries) in the indoor space and a change of usage environment.

An air conditioning blow-out panel according to a second aspect of the present invention is the air conditioning blow-out panel according to the first aspect of the present invention. The air conditioning blow-out panel further includes a single or plurality of sensors configured to output the sensor information. The control unit is configured to transmit the single or plurality of pieces of senor information outputted by the single or plurality of sensors to the network via the network connection unit.

The air conditioning blow-out panel according to the second aspect is capable of transmitting its own sensor information to the network.

An air conditioning control system according to a third aspect of the present invention includes a plurality of air conditioning indoor units, the plurality of air conditioning blow-out panels according to one of the first and second aspects that are attachable/detachable to/from main bodies of the air conditioning indoor units, the network, a storage section and a control command generation section. The network is an open network for receiving/transmitting the sensor information of the plurality of air conditioning blow-out panels. The storage section is arranged in the network. The storage section is configured to store the sensor information. The control command generation section is arranged in the network. The control command generation section is configured to generate the control command for each of the air conditioning blow-out panels based on the sensor information stored in the storage section. Note the open network is a network accessible by the control units of a plurality of air conditioning blow-out panels.

In the air conditioning control system of the third aspect, the plurality of air conditioning blow-out panels are capable of sharing the sensor information in the open network. Therefore, the air conditioning control system is capable of efficiently and accurately obtaining the sensor information.

An air conditioning control system according to a fourth aspect of the present invention is the air conditioning control system according to the third aspect of the present invention. The air conditioning control system further includes a controller. The controller includes a display unit and an input unit. The display unit is configured to display condition information generated based on the sensor information. The input unit is configured to receive an input of information for generating the control command based on the condition information. Note that the condition information is information for indicating a condition (e.g., humidity and temperature) derived from the sensor information (e.g., the number of people in the indoor space and thermal environment).

In the air conditioning control system of the fourth aspect, a user is capable of directly and autonomously inputting a control command based on the condition information. Therefore, the air conditioning control system is capable of conducting airflow control in response to user's demand.

An air conditioning control system according to a fifth aspect of the present invention is the air conditioning control system according to the third aspect of the present invention. In the air conditioning control system, the sensor information includes at least one of: the number of people in an indoor space; a position(s) of the person/people in the indoor space; identification information of the people in the indoor space; temperature of the indoor space, humidity of the indoor space; air quality of the indoor space; a weather condition; the airflow direction of the air conditioning blow-out panel; the airflow volume of the air conditioning blow-out panel; the blow-out temperature of the air conditioning blow-out panel; an on/off state of peripheral device; and outdoor temperature information.

The air conditioning control system according to the fifth aspect is capable of using a variety of sensor information. Therefore, it is capable of achieving more comfortable airflow control.

An air conditioning control system according to a sixth aspect of the present invention is the air conditioning control system according to the fifth aspect of the present invention. In the air conditioning control system, each of the air conditioning indoor unit further includes a blow-out temperature regulation section. Additionally, the control command generation section is configured to generate a blow-out temperature control command for regulating the blow-out temperature of the air conditioning indoor unit in accordance with the outdoor temperature information. Furthermore, the blow-out temperature regulation section is configured to regulate the blow-out temperature of the air conditioning indoor unit in accordance with the blow-out temperature control command.

The air conditioning control system according to the sixth aspect is capable of conducting airflow control with better coefficient of performance. Accordingly, it is capable of enhancing energy saving.

An air conditioning control system according to a seventh aspect of the present invention is the air conditioning control system according to the fifth aspect of the present invention. In the air conditioning control system, the control command generation section is configured to generate an airflow volume control command for regulating the airflow volume of the air conditioning indoor unit in accordance with the outdoor temperature information. Furthermore, the control unit is configured to drive the driving unit in accordance with the airflow volume control command.

An air conditioning control system according to an eighth aspect of the present invention is the air conditioning control system of the seventh aspect of the present invention. In the air conditioning control system, the control command generation section is configured to generate the airflow volume control command for reducing the airflow volume when the outdoor temperature is higher than indoor temperature whereas the control command generation section is configured to generate the airflow volume control command for increasing the airflow volume when the outdoor temperature is equal to or lower than the indoor temperature.

Both of the air conditioning control system according to the seventh and eighth aspects are capable of enhancing energy saving especially for an air conditioning apparatus configured to conduct processing of taking in outdoor air when regulating the airflow volume.

An air conditioning control system according to a ninth aspect of the present invention is the air conditioning control system according to the third aspect of the present invention. In the air conditioning control system, the plurality of air conditioning blow-out panels are classified into groups. The storage section is configured to obtain and store the sensor information of any one of a single or plurality of air conditioning blow-out panels belonging to each of the groups. Note that classification into a plurality of groups means data classification for classifying the plurality of blow-out panels based on their installation areas in a large target space for air conditioning, on a room-to-room basis, or the like.

The air conditioning control system according to the ninth aspect obtains and stores a single piece of sensor information from each of the groups to which the plurality of air conditioning blow-out panels belong. Therefore, it does not need to obtain sensor information from all the blow-out panels. In other words, it is capable of avoiding storage of overlapping information. Furthermore, it is capable of selecting and obtaining appropriate sensor information in accordance with environment and conditions.

An air conditioning control method according to a tenth aspect of the present invention is an air conditioning control method for controlling a plurality of air conditioning blow-out panels connected to a network. Here, each of the air conditioning blow-out panels is configured to be attachable/detachable to/from a main body of an air conditioning indoor unit. The air conditioning control method includes a sensor information obtainment step, a sensor information output step, a control command generation step and a control command transmission step. In the sensor information obtainment step, sensor information of the plurality of air conditioning blow-out panels is obtained. In the sensor information output step, the sensor information is outputted to an open network. In the control command generation step, a control command is generated with respect to each of the air conditioning blow-out panels based on the sensor information. In the control command transmission step, the control command is transmitted to the air conditioning blow-out panels through the network.

In the air conditioning control method according to the tenth aspect, the sensor information is obtained through the network, including sensor information from an air conditioning blow-out panel other than a target air conditioning blow-out panel to be controlled. It is thereby possible to achieve air conditioning for achieving comfortableness and for enhancing energy saving by only controlling the air conditioning blow-out panel.

### <Advantageous Effects of Invention>

The air conditioning blow-out panel according to the first aspect of the present invention is capable of optimally conducting airflow control by obtaining a single or plurality of pieces of sensor information through the network and by driving the airflow regulation mechanism. Accordingly, it is possible to achieve air conditioning control for achieving comfortableness and for enhancing energy saving only by controlling the air conditioning blow-out panel. Furthermore, the air conditioning blow-out panel is attachable/detachable to/from the main body of the air conditioning indoor unit, and the sensor information is allowed to be received through the network. Therefore, it is possible to easily install the air conditioning blow-out panel or attach the air conditioning blow-out panel to another air conditioning indoor unit in accordance with a layout change of peripheral devices (e.g., personal computers and luminaries) in the indoor space and a change of usage environment.

The air conditioning blow-out panel according to the second aspect of the present invention is capable of transmitting its own sensor information to the network.

In the air conditioning control system of the third aspect of the present invention, the plurality of air conditioning blow-out panels are capable of sharing the sensor information in the open network. Therefore, the air conditioning control system is capable of efficiently and accurately obtaining the sensor information.

In the air conditioning control system according to the fourth aspect of the present invention, a user is capable of directly and autonomously inputting a control command based on the condition information. Therefore, the air conditioning control system is capable of conducting airflow control in response to user's demand.

The air conditioning control system according to the fifth aspect of the present invention is capable of using a variety of sensor information. Therefore, it is capable of achieving more comfortable airflow control.

The air conditioning control system according to the sixth aspect of the present invention is capable of conducting airflow control with better coefficient of performance by regulating blow-out temperature of the air conditioning indoor unit in accordance with the outdoor temperature information. Therefore, it is capable of enhancing energy saving.

Both of the air conditioning control systems according to the seventh and eighth aspects are capable of enhancing energy saving especially for an air conditioning apparatus configured to conduct processing of taking in outdoor air when regulating the airflow volume by controlling the airflow volume of the air conditioning indoor unit in accordance with the outdoor temperature information.

The air conditioning control system according to the ninth aspect of the present invention obtains and stores a single piece of sensor information from each of the groups to which the plurality of air conditioning blow-out panels belong. Therefore, it does not need to obtain sensor information from all the blow-out panels. In other words, it is capable of avoiding storage of overlapping information. Furthermore, it is capable of selecting and obtaining appropriate sensor information in accordance with environment and conditions.

In the air conditioning control method according to the tenth aspect of the present invention, sensor information is obtained through the network, including sensor information from an air conditioning blow-out panel other than a target air conditioning blow-out panel to be controlled,. It is thereby possible to achieve air conditioning for achieving comfortableness and for enhancing energy saving by only controlling the air conditioning blow-out panel.

### BRIEF DESCRIPTION OF THE DRAWINGS

Fig. 1 is a diagram illustrating an entire configuration of an airflow control system according to an embodiment of the present invention.
Fig. 2 is a schematic diagram of a configuration of an air conditioning blow-out panel according to an embodiment of the present invention.
Fig. 3 is a flowchart showing a series of steps of processing to be executed by the airflow control system according to the embodiment of the present invention.
Fig. 4A is a diagram illustrating an example of airflow control according to the embodiment of the present invention.
Fig. 4B is a diagram illustrating an example of airflow control according to the embodiment of the present invention.
Fig. 5 is a schematic diagram illustrating an entire configuration of an airflow control system according to a first modification of the embodiment.
Fig. 6 is a flowchart showing a series of steps of processing to be executed by the airflow control system according to the first modification.
Fig. 7 is a diagram illustrating an example of airflow control according to the first modification.
Fig. 8 is a schematic diagram illustrating a configuration of an air conditioning blow-out panel according to a second modification of the embodiment.
Fig. 9A is a chart for showing a blow-out temperature control according to the second modification.
Fig. 9B is a chart for showing a blow-out temperature control according to the second modification.
Fig. 9C is a chart for showing a blow-out temperature control according to the second modification.

### EXPLANATION OF THE REFERENCE NUMERALS

- 1: airflow control system (air conditioning control system)
- 2: network
- 10: air conditioning blow-out panel
- 11: sensor
- 12: network connection unit
- 13: control unit
- 14: driving unit
- 15: airflow regulation mechanism
- 16: blow-out port
- 20: airflow control device
- 21: sensor information storage section (storage section)
- 23: condition information generation section
- 24: controller
- 24a: input unit
- 24b: display unit
- 50: air conditioning indoor unit
- 55: blow-out temperature regulation section

### BEST MODE FOR CARRYING OUT THE INVENTION

### «Embodiment of Invention»

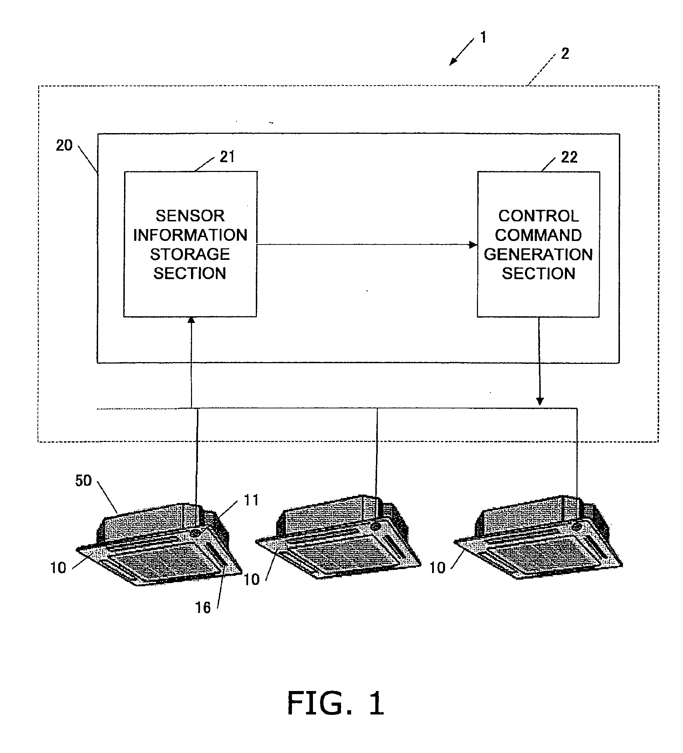

Fig. 1 illustrates a schematic diagram of an entire configuration of an airflow control system 1 according to an embodiment of the present invention. The airflow control system 1, functioning as an air conditioning control system, is configured to control air conditioning in an indoor space by controlling airflow blown out of air conditioning blow-out panels 10.

### <Entire Configuration of Airflow Control System>

As illustrated in Fig. 1, the airflow control system 1 is mainly composed of the air conditioning blow-out panels 10 (hereinafter referred to as blow-out panels 10) and an airflow control device 20. The airflow control device 20 is disposed such that it can communicate with the blow-out panels 10.

The blow-out panels 10 are detachably attached to main bodies of air conditioning indoor units 50, respectively. A blow-out panel 10 and a main body of an air conditioning indoor unit 50 attached with the blow-out panel composes an air conditioning indoor unit. The air conditioning blow-out panels 10 may be configured to be directly attached/detached to/from the main bodies of the air conditioning indoor units, respectively (i.e., a so-called ceiling cassette type), or may be configured to be attached/detached to/from the main bodies of the air conditioning indoor units, respectively, through air transportation ducts and the like (i.e., a so-called duct type).

The blow-out panels 10 include sensors 11, respectively. Although not illustrated in the figure, the sensors 11 in the air conditioning blow-out panels 10 may not be necessarily limited to single-type sensors. Each of the sensors 11 may be composed of a plurality of sensors such as: a sensor for detecting and outputting the number of, a position(s) of and an identification information of a person/people in the indoor space though a mobile phone(s) and an IC card(s); a temperature sensor; a humidity sensor; an infrared sensor; a CO2 sensor, an airflow direction and airflow volume sensor; and a luminosity sensor. In this case, information obtained and outputted by the sensors include, for instance: the number of people in the indoor space; a position(s) of a person/people in the indoor space; identification information of a person/people in the indoor space; indoor temperature; indoor humidity; indoor air quality; a weather condition; a blow-out direction of the air conditioning blow-out panel; the airflow volume of the air conditioning blow-out panel; blow-out temperature of the air conditioning blow-out panel; and on/off states of peripheral devices. Additionally, the sensors may not be attached to the blow-out panels 10. For example, the sensors may be disposed in the main bodies of the air conditioning indoor units 50 or other places.

Moreover, each of the blow-out panels 10 includes blow-out ports 16 in four directions. As described below, each of the blow-out panels 10 is configured to control airflow by controlling flaps arranged in the inside of the blow-out ports 16, shutters for opening/closing the blow-out ports 16, other heretofore-known air flow volume regulation mechanism and the like.

The airflow control device 20 includes a sensor information storage section 21 and a control command generation section 22. The sensor information storage section 21 is configured to obtain information from the sensors 11. The control command generation section 22 is configured to generate a control command based on the sensor information. The sensors 11 and the airflow control device 20 are disposed such that they can communicate with each other through wired/wireless connections, and form a network 2. For example, the airflow control device 20 is installed into a computer including control units (e.g., a memory and a CPU). Additionally, the computer may be provided with a control unit for conducting other air conditioning control (e.g., air conditioning control for the indoor unit and the outdoor unit).

The sensor information storage section 21 is configured to collectively obtain sensor information transmitted from the blow-out panels 10 and sensor information transmitted from other sensors, and is configured to store the sensor information with ID information for specifying areas where the sensor information was obtained (e.g., ID information of the blow-out panel 10 arranged in the area where the sensor information was obtained).

The control command generation section 22 is configured to generate a control command based on the sensor information obtained from the sensor information storage section 21. Generation of the control command will be hereinafter explained in detail.

Also, the network formed in the airflow control system 1 of the present embodiment is assumed to be a local area network. However, it may be a distant network through a public telecommunication network or a private line and the like.

### <Schematic Configuration of Air Conditioning Blow-Out Panel >

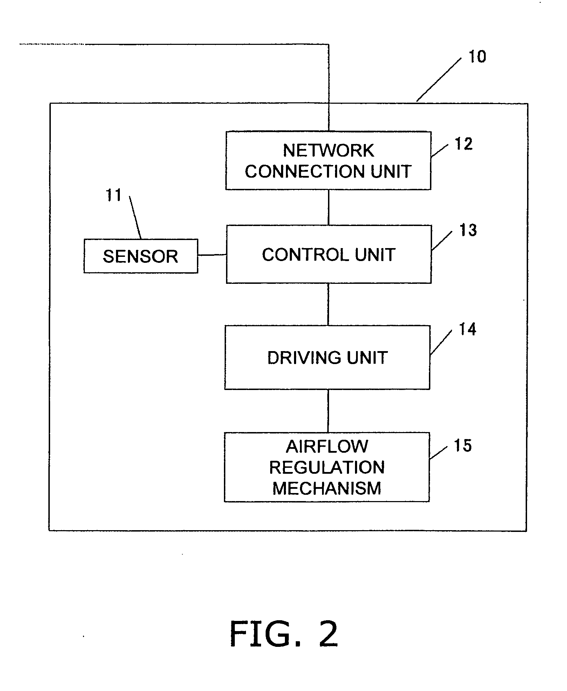

Fig. 2 illustrates a schematic configuration of the interior of each of the blow-out panels 10. Each of the blow-out panels 10 includes the sensor 11, a network connection unit 12, a control unit 13, a driving unit 14 and a airflow regulation mechanism 15. The network connection unit 12 is configured to transmit the sensor information from the sensor 11 to the airflow control device 20. The network connection unit 12 is also configured to receive a control command from the control command generation section 22 and transmit it to the control unit 13. The control unit 13 is configured to control the driving unit 14 in accordance with the control command. The driving unit 14 is configured to drive the airflow regulation mechanism 15.

The airflow regulation mechanism 15 mainly includes the flaps for regulating the airflow direction, the shutters for opening/closing the blow-out ports or a mechanism such as an airflow volume distribution mechanism (configured to increase/decrease the airflow volume by enlarging/reducing an opening area of the blow-out port) as disclosed in the specification of Japanese Patent No. 3807305.

For example, an airflow direction is allowed to be determined by changing an angle of the flap disposed in the interior of the blow-out port 16. The airflow direction is allowed to be set with respect to the blow-out ports 16 of the blow-out panels 10, respectively. The airflow volume is allowed to be regulated by enlarging/reducing an opening area of a blow-out path.

### <Processing by Airflow Control System>

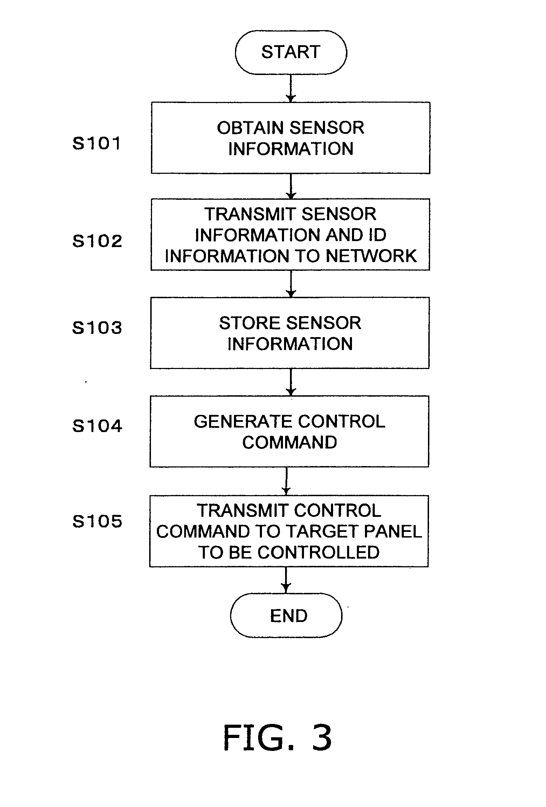

Fig. 3 illustrates a series of steps of processing to be executed by the airflow control system 1 according to the present embodiment with a flowchart.

First, the sensors 11 of the blow-out panels 10 obtain sensor information, respectively (Step S101), and subsequently transmit the sensor information and ID information for specifying areas where the sensor information was obtained to the network 2 (Step S102). Next, the sensor information storage section 21 stores the sensor information (Step S103). Furthermore, the control command generation section 22 generates a command for controlling the airflow direction and the airflow volume of each blow-out panel 10 based on the sensor information stored in the sensor information storage section 21 (Step S104), and transmits the control command to the blow-out panel 10 positioned in the corresponding area (Step S105).

In this case, generation and transmission of a control command by the control command generation section 22 may be conducted at predetermined time intervals or in accordance with a predetermined demand signal inputted by a user. When generation and transmission of a control command are conducted at predetermined time intervals, predetermined processing may be executed between Steps S103 and S104 for determining if the sensor information exceeds predetermined threshold, numeric range and the like. Then, when the sensor information exceeds the threshold or the range, a control command may be generated.

### <Examples of Airflow Control>

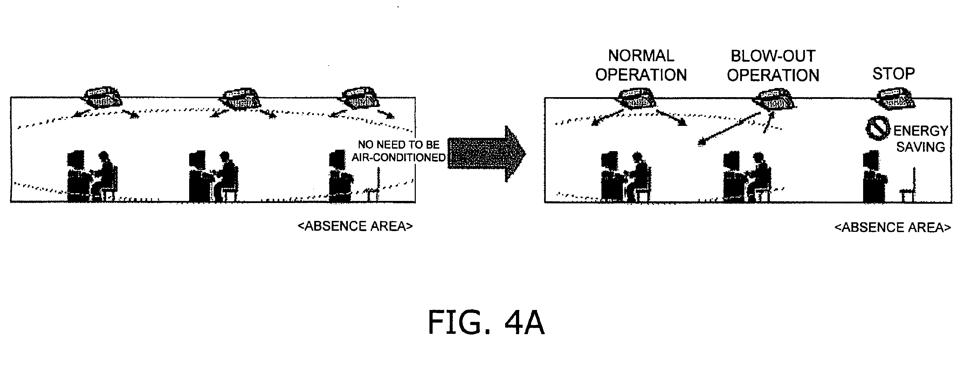

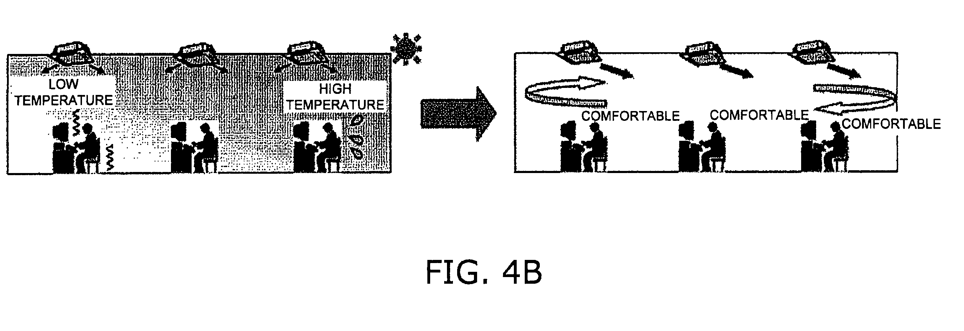

Figs. 4A and 4B illustrate examples of airflow control according to the present embodiment. Generation of a control command will be hereinafter explained along with the example.

Fig. 4A illustrates control for preventing outflow of air-conditioned air to an absence area that has no people by regulating the airflow when a target space for air conditioning accommodates a person/people and simultaneously includes the absence area. For example, the control is conducted as follows.

As described above, the sensor information storage section 21 of the airflow control device 20 is configured to store the sensor information transmitted from the sensors of the plurality of the blow-out panels 10 arranged in the target space for air conditioning. The control command generation section 22 is configured to classify the air conditioning area into three areas (i.e., "absence area", "presence area" and "adjacent area") based on position information of a person/people in the target space that is part of the sensor information stored in the sensor information storage section 21. In this case, "the absence area" is defined as an area with no people. "The adjacent area" is defined as an area adjacent to the absence area, accommodating a person/people. "The presence area" is defined as an area accommodating a person/people excluding the adjacent area. The control command generation section 22 is configured to transmit a control command of inactivation (i.e., reduction of the airflow volume to zero) to the blow-out panel 10 arranged in the absence area. Additionally, the control command generation section 22 is configured to transmit a control command for setting an airflow direction toward the presence area to the blow-out panel 10 arranged in the adjacent area. With the configuration, it is possible to prevent outflow of the air-conditioned air to the absence area. In other words, it is possible to reduce energy consumed by unnecessary air conditioning.

Furthermore, in the airflow control based on the position information included in the sensor information, the airflow direction of the blow-out panel 10 arranged in the adjacent area may be set to be a downward direction, an obliquely-downward direction opposite to the presence area, or directions swinging between predetermined angles. Also, in the airflow control, the airflow volume of the blow-out panel 10 arranged in the adjacent area may be kept to the same as the airflow volume in the presence area. Especially when the presence area occupies a small part of the target space for air conditioning, the airflow control makes it possible to prevent diffusion of the air-conditioned air to the absence area. Accordingly, it is possible to enhance comfortableness and energy saving.

Fig. 4B illustrates control for eliminating temperature irregularity in the indoor space by generating airflow when the indoor space simultaneously includes a high-temperature part and a low-temperature part. For example, when difference is equal to or greater than a predetermined value among numeric information obtained from temperature sensors of the blow-out panels 10 installed in the target space for air conditioning, the control command generation section 22 of the airflow control device 20 transmits control commands to the respective blow-out panels 10 and generate airflow for mixing the entire air in the indoor space. Specifically, as illustrate in Fig. 4B, the airflow directions of the blow-out ports 16 are set to a predetermined circulation direction so as to entirely circulate the airflow along the walls of the indoor space, thereby eliminating temperature irregularity in the indoor space.

In the illustrated example, temperature, humidity, air quality and position information of a person/people in the indoor space are obtained from the sensor information, and the control command generation section 22 determines if the control command should be generated based on the sensor information. For the determination, a threshold or a predetermined numeric range is preliminarily set for temperature of the indoor space, humidity of the indoor space and air quality of the indoor space, for instance. When they exceed their thresholds or numeric ranges, respectively, the control command generation section 22 determines necessity of control and accordingly generates and transmits a control command. Furthermore, in the generation of the control command, the airflow volume may be controlled under set conditions such as a weather condition, blow-out temperature of the air conditioning blow-out panel and on/off states of peripheral devices.

### <Characteristics of Airflow Control System According to Embodiment>

(1)
   The airflow control system 1 according to the present embodiment obtains sensor information, including sensor information of a blow-out panel 10 other than a target blow-out panel 10 to be controlled, through the network. Based on this, the airflow control system 1 drives the airflow regulation mechanism 15. Accordingly, it is possible to achieve air conditioning control that comfortableness is efficiently achieved and energy saving is enhanced only by the control of the blow-out panels 10.
(2)
   According to the air control system 1 of the present embodiment, the blow-out panels 10 are allowed to be detachably attached to the air conditioning indoor units, respectively. Additionally, the blow-out panels 10 are capable of receiving sensor information through the open network. Therefore, installation of the blow-out panels 10 or rearrangement of the blow-out panels 10 to other air conditioning indoor units will be easily conducted in accordance with a layout change of peripheral devices (e.g., personal computers and luminaries) in the indoor space and environmental change of using the airflow control system 1.

### «First Modification»

### <Entire Configuration of First Modification>

In the aforementioned embodiment, the airflow control device 20 of the airflow control system 1 is configured to transmit the sensor information from the sensor information storage section 21 to the control command generation section 22. In addition to this, a controller 24 may be further provided between them.

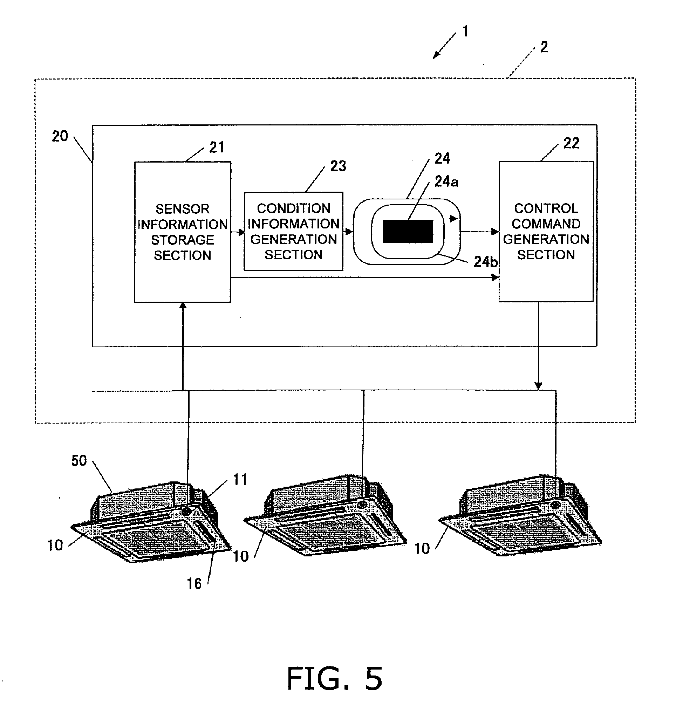

As illustrated in Fig. 5, an airflow control device 20 includes a sensor information storage section 21, a condition information generation section 23, a controller 24, and a control command generation section 22. The sensor information storage section 21 is configured to obtain information from sensors 11. The condition information generation section 23 is configured to generate condition information (as described later) based on the information from the sensor information storage section 21. The controller 24 is configured to display the condition information and allow a user to input information for a control command. The control command generation section 22 is configured to generate a control command based on the displayed input information.

The condition information generation section 23 is configured to generate information of an indoor condition based on the sensor information stored in the sensor information storage section 21. For example, the condition information indicates a condition (e.g., humidity and temperature) derived from the sensor information (e.g., the number of people in the indoor space and thermal environment).

The controller 24 includes a display unit 24b (e.g., liquid-crystal display) and a touch-panel typed input unit 24a displaying icons and the like. The display unit 24b is configured to display condition information generated by the condition information generation section 23. For example, the display unit 24b may be configured to display indoor temperature and humidity or may be configured to display a discomfort index calculated with a predetermined formula. Alternatively, the display unit 24b may be configured to display a picture or a sign for making a user intuitively understand the conditions. When a user feels necessity for some sort of controls by the displayed information, he/she inputs information (e.g., "hot", "cold" and "need airflow") into the input unit 24a. In this case, a target blow-out panel 10 to be controlled may be chosen by a user directly inputting the position of the target blow-out panel 10. Alternatively the target blow-out panel 10 to be controlled may be set in accordance with a user's position specified by an input of the user information (e.g., a user ID). Here, a screen of the display unit 24b and a form of the input unit 24a may not be limited to the above, and may have other configurations. The control command generation section 22 is configured to generate a control command based on the information inputted by a user through the controller 24.

### <Processing by First Modification>

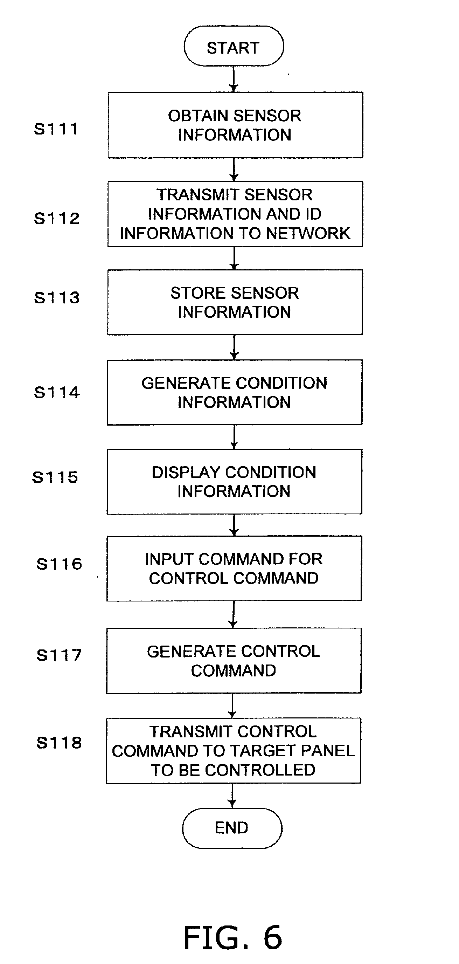

As illustrated in Fig. 6, processing of the present modification will be executed as follows. In Step S111, each of the sensors 11 obtains sensor information. In Step S 112, the sensor information is transmitted to the network together with ID information for specifying an area where the sensor information was obtained. In Step S113, the sensor information storage section 21 stores the sensor information obtained.

Next, in Step S114, the condition information generation section 23 generates condition information based on the sensor information thus stored and transmits it to the controller 24. In Step S115, the controller 24 displays condition information. In Step S116, information for generating a control command is inputted by a user based on the displayed condition information. In Step S117, a command for controlling the airflow direction and the airflow volume of each of the blow-out panels 10 is generated. In Step S118, the control command is transmitted to a target blow-out panel 10 to be controlled.

### <Example of Airflow Control of First Modification>

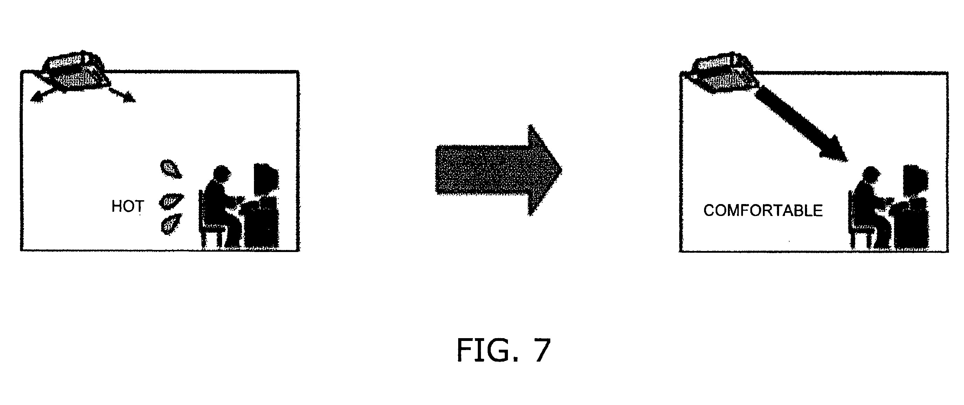

Fig. 7 illustrates an example of the airflow control of the present modification. In the illustrated example, when a person feels hot in the indoor space and inputs information such as "hot" into the controller 24, a control command is generated for producing a local airflow making the person feel airflow. The control command is transmitted to the target blow-out panel 10. For the control command, the airflow volume and the airflow direction may be determined as follows. The comfortableness of a person in the indoor room and his/her adjacent person is estimated based on a variety of information such as distance and angle between the blow-out panel and the person in the indoor space, the human body heat storage amount of the person in the indoor space, existence/nonexistence of an adjacent person, temperature in the indoor space, and the present value of the airflow volume and the airflow direction. The airflow volume and the airflow direction are set such that the estimated values for the comfortableness are in predetermined ranges. The control command may be changed from hour to hour based on a period of time when the person receives airflow in the indoor space or variation in comfortableness. Also, the human body heat storage amount of a person in the indoor space may be, for instance, derived from the time-series variation in position information of the person in the indoor space obtained by means of a GPS and the like.

The condition information generation section 23 is configured to obtain temperature, humidity, air quality and position information of a person in the indoor space and the like based on the sensor information. Then, the condition information generation section 23 is configured to generate condition information based on the sensor information, and transmits it to the controller 24. For example, for generating the condition information, thresholds or predetermined numeric ranges are preliminarily set for temperature, humidity and air quality in the indoor space. The preliminarily-set thresholds or predetermined numeric ranges are compared with actual values of temperature, humidity and air quality in the indoor space. The condition information is generated based on the results of comparison. The controller 24 is configured to display information such as "hot" and "cold". In generating the condition information, a variety of conditions may be set, such as a weather condition, blow-out temperature of the air conditioning blow-out panel and on/off states of peripheral devices.

The position information of a person in the indoor space may be comprehended by information transmitted from a personal computer, an IC card, a mobile phone and the like used by the person in the indoor space. Additionally, the airflow control device 20 may be configured to preliminarily store ID information of the person in the indoor space and the airflow volume preferred by the person in the indoor space and the like as associated information. In this case, when the airflow control device 20 receives the ID information of the person in the indoor space, it may set the airflow volume to be the preferred airflow volume of the person in the indoor space, for instance.

### <Characteristics of First Modification>

In the airflow control system 1 according to the present modification, the controller 24 includes the input unit 24a and the display unit 24b. The input unit 24a is configured to directly receive an input of a control command, and the display unit 24b is configured to display condition information generated based on the sensor information. With the configuration, a user is capable of autonomously and directly inputting a control command based on the displayed condition information. Therefore, the airflow control system 1 is capable of easily and promptly conducting airflow control to meet the user's demand.

### «Second Modification»

The airflow control system 1 according to the second modification of the present embodiment will be hereinafter explained.

Sensor information, stored in the sensor information storage section 21 of the airflow control device 20 of the present modification, includes outdoor temperature information. The outdoor temperature information is obtained by a predetermined outdoor temperature information obtainment means (e.g., a temperature sensor disposed outdoors and obtainment of weather information from a public meteorological institute). The control command generation section 22 of the airflow control device 20 is configured to obtain outdoor temperature information from the sensor information storage section 21. The control command generation section 22 is configured to generate a control command in accordance with the obtained outdoor temperature information. Examples of the control command will be hereinafter explained.

### <First Example>

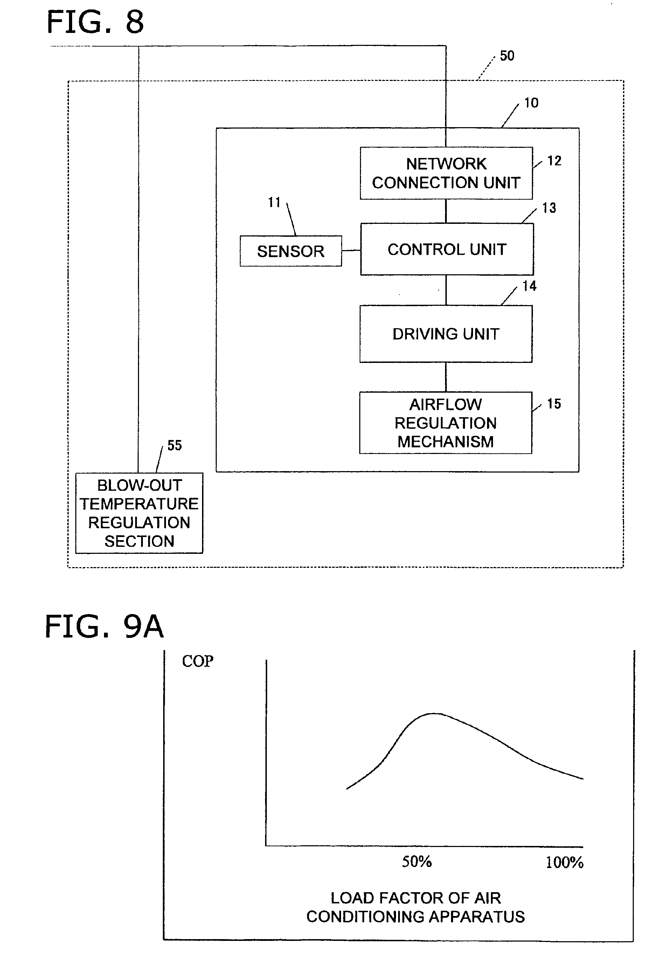

As illustrated in Fig. 8, in the airflow control system 1 according to a first example of the present modification, a blow-out temperature regulation section 55 of the air conditioning indoor unit 50 is controlled in accordance with the aforementioned outdoor temperature information. The blow-out temperature regulation section 55 is configured to regulate blow-out temperature of the air conditioning indoor unit 50 by generating and transmitting a command regarding frequency of a compressor and opening/closing of a control valve and the like.

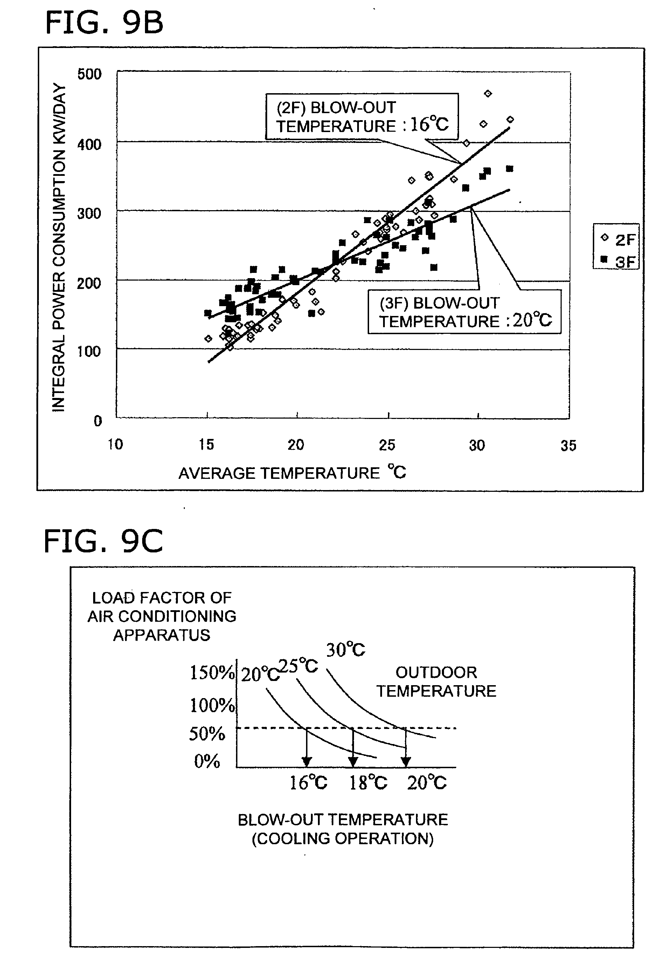

As illustrated in Fig. 9A, coefficient of performance (COP) of an air conditioning apparatus generally reaches the peak when load factor of the air conditioning apparatus falls in the range of approximately 50-70%. For example, as illustrated in Fig. 9B, it is therefore possible to regulate the load factor of the air conditioning apparatus to be approximately 50-70% by increasing the blow-out temperature when the outdoor temperature is high. Thus energy saving efficiency gets higher. Based on this, it is possible to keep better COP by increasing the blow-out temperature in accordance with an increase rate of the outdoor temperature. Accordingly, the airflow control system 1 is capable of enhancing energy saving. Note that it is desirable to regulate the blow-out temperature such that the indoor temperature is in a range of a preset temperature of the air conditioning apparatus. This is because the comfortableness will be degraded when the indoor temperature is out of the range of the preset temperature. On the other hand, it is possible to achieve similar working effects in a heating operation by reducing the blow-out temperature within the preset temperature range in accordance with a decline of the outdoor temperature.

Therefore, in the present modification, the control command generation section 22 is configured to generate a control command for increasing the blow-out temperature in accordance with an increase of the outdoor temperature in a cooling operation of the air conditioning apparatus. Following is a specific explanation thereof.

For example, relation between the blow-out temperature and the load factor of the air conditioning apparatus is measured and stored with respect to each outdoor temperature level. Fig. 9C is an example of the relations obtained by the measurement. Fig. 9C illustrates relations between the blow-out temperature and the load factor of the air conditioning apparatus in a cooling operation with respect to predetermined outdoor temperature levels (i.e., 30, 25 and 20 degrees Celsius). In the relations, when the outdoor temperature is 30 degrees Celsius, the load factor of the air conditioning apparatus is approximately 50% under the setting of the blow out temperature of 20 degrees Celsius. Similarly, when the outdoor temperature is 25 degrees Celsius, it is possible to set the load factor of the air conditioning apparatus to approximately 50% by setting the blow-out temperature to 18 degrees Celsius. Furthermore, when the outdoor temperature is 20 degrees Celsius, it is possible to set the load factor of the air conditioning apparatus to approximately 50% by setting the blow-out temperature to 16 degrees Celsius.

The control command generation section 22 refers to the relations between the stored blow-out temperature and the stored load factor of the air conditioning apparatus in accordance with the outdoor temperature. Based on the reference, the control command generation section 22 determines the blow-out temperature so as to set the load factor of the air conditioning apparatus to approximately 50%. The control command generation section 22 generates a control command based on the determination.

It should be noted that the relations and the values illustrated in Figs. 9A to 9C are only examples. Therefore, the relations and the values obviously depend on a variety of factors such as air conditioning environment and types of the air conditioning apparatus. Additionally, depending on a feature of the air conditioning apparatus and the like, COP may get higher even when the load factor of the air conditioning apparatus is out of the range of 50-70%.

The aforementioned control command is transmitted to the blow-out temperature regulation section 55, and the blow-out temperature regulation section 55 regulates the blow-out temperature.

With the aforementioned configuration and control, the airflow control system 1 is capable of conducting airflow control with better COP. Accordingly, the airflow control system 1 is capable of enhancing energy saving.

### <Second Example>

The airflow control system 1 according to a second example of the present modification is configured to control the airflow volume of the blow-out panels 10 in accordance with the aforementioned outdoor temperature information.

For example, the control command generation section 22 generates a control command for less airflow volume with a higher outdoor temperature when the air conditioning apparatus conducts a cooling operation by taking in the outdoor air. To the contrary, the control command generation section 22 generates a control command for more airflow volume with a lower outdoor temperature. For example, when the outdoor temperature is higher than the indoor temperature, the control command generation section 22 generates a control command for reducing the airflow by a predetermined volume. On the other hand, when the outdoor temperature is equal to or lower than the indoor temperature, the control command generation section 22 is configured to generate a control command for increasing airflow by a predetermined volume. In this case, increase and decrease of the airflow volume are not limited to a predetermined amount. For example, the airflow volume may be increased or decreased in accordance with difference between the outdoor temperature and the indoor temperature. With the configuration, it is possible to prevent increase of the air conditioning load generated by taking in the outdoor air of high temperature and to reduce the air conditioning load by taking in the outdoor air of low temperature. Accordingly, the airflow control system 1 is capable of enhancing energy saving. On the other hand, the airflow control system 1 is capable of achieving similar working effects by conducting the opposite control in the heating operation.

As illustrated in Fig. 8, the aforementioned control command is transmitted to the control unit 13 through the network connection unit 12, and the control unit 13 controls the airflow volume through the driving unit 14 and the airflow regulation mechanism 15.

With the aforementioned configuration and control, the airflow control system 1 is capable of reducing the air conditioning load, and is thereby capable of enhancing energy saving.

### «Other Modifications»

(A)
   In Fig. 1, the sensors 11 are attached to all of the blow-out panels 10, respectively. However, sensor information may be obtained only from one or some of the blowout panels 10. Alternatively, the sensor 11 may be detached from any one of the blow-out panels 10 and may be attached to any of the rest of the blow-out panels 10.
   With the configuration, it is possible to efficiently collect the sensor information. Additionally, it is possible to attach a sensor in accordance with a layout change of peripheral devices such as personal computers and an luminaries in the indoor space and a change of usage environment. For example, when a sensor 11a is positioned above a water heater or in the vicinity of a luminary or the like, humidity or temperature to be detected may be too high. Accordingly, there are chances of obtaining inaccurate information. In this case, the aforementioned configuration makes it possible to prevent such disadvantage.
(B)
   Furthermore, the plurality of blow-out panels 10 may be classified into groups, and the sensor information storage section 21 may be configured to obtain and store sensor information from one of the blow-out panels 10 of each group. For example, classification into groups means data classification for classifying the plurality of blow-out panels 10 into groups. The classification is made based on the area of the blow-out panels that is determined according to thermal distribution in a large target space for air conditioning, the room where the blow-out panels are installed, or the like.
   With the configuration, it is not necessary to obtain sensor information from all the blow-out panels. In other words, it is possible to avoid storage of overlapping information. Furthermore, it is possible to select and obtain appropriate sensor information in accordance with environment and conditions.
(C)
   The airflow control device 20 may be provided in the interior of each of the air conditioning blow-out panels 10. Alternatively, the control unit 13 of each of the air conditioning blow-out panels 10 may be configured to conduct control by collecting sensor information and generating a control command.
   With the configuration, the system configuration will be simpler and it is possible to easily build up the system.
(D)
   In the first modification, the controller 24 may be connected to a personal computer, and information for generating a control command may be inputted through a personal computer of an individual user.
   With the configuration, it is possible to cut out user's complex tasks such as moving over to a position of the controller 24 and searching out a target controller among the plurality of controllers 24.
(E)
   The air conditioning indoor unit may be configured to be operated through a network connected to the network connection unit 12 thereof. In general, an operation of the air conditioning indoor unit (change of a preset temperature and the like) is executed through a remote controller connected thereto via a private line. However, a means for communicating with the air conditioning indoor unit may be provided in the interior of the air conditioning blow-out panel 10. Based on such configuration, an operation of the air conditioning indoor unit may be executed through a network connected to the air conditioning indoor unit via the network connection unit 12.
   With the configuration, controllability will be enhanced, and it is also possible to achieve both comfortableness and energy saving at a higher level.
(F)
   An operational condition of the air conditioning indoor unit may be allowed to be outputted to a network connected to the air conditioning indoor unit via the network connection unit 12. For example, information of a sensor installed in the interior of the air conditioning indoor unit (e.g., inlet air temperature, temperature of a refrigerant pipe, an operational condition, opening angle of an electronic expansion valve and electricity consumption) may be allowed to be outputted to the network connected to the air conditioning indoor unit via the network connection unit 12.
   With the configuration, an operation condition of the air conditioning apparatus in the entire building will be easily comprehended. Accordingly, accurate control can be achieved. Consequently, it is possible to achieve both comfortableness and energy saving at a higher level.

### INDUSTRIAL APPLICABILITY

The present invention is useful as an air conditioning blow-out panel, an air conditioning control system and an air conditioning control method for achieving comfortableness and enhancing energy saving by conducting effective airflow control based on sensor information of an entire space.

## Claims

1. An air conditioning blow-out panel (10) attachable/detachable to/from a main body of an air conditioning indoor unit, comprising:
an airflow regulation mechanism (15) configured to regulate at least one of an airflow volume and an airflow direction;
a driving unit (14) configured to drive the airflow regulation mechanism;
a control unit (13) configured to drive the driving unit; and
a network connection unit (12) being connected to a network (2) for obtaining a single or plurality of pieces of sensor information, the network connection unit (12) being configured to receive a control command generated based on the sensor information and transmit the control command to the control unit, and
wherein the control unit (13) is configured to drive the driving unit (14) in accordance with the control command generated based on the sensor information obtained through the network (2).

2. The air conditioning blow-out panel according to claim 1,
further comprising a single or plurality of sensors (11) configured to output the sensor information, and
wherein the control unit (13) is configured to transmit the single or plurality of pieces of sensor information outputted by the single or plurality of sensors to the network (2) via the network connection unit (12).

3. An air conditioning control system, comprising:
a plurality of air conditioning indoor units (50);
a plurality of air conditioning blow-out panels (10) each of which is according to one of claims 1 and 2, the air conditioning blow-out panels (10) being attachable/detachable to/from main bodies of the air conditioning indoor units (50)
the network (2) that is an open network for receiving/transmitting the sensor information of the plurality of air conditioning blow-out panels;
a storage section (21) being arranged in the network, the storage section (21) being configured to store the sensor information; and
a control command generation section (22) arranged in the network, the control command generation section (22) being configured to generate the control command for each of the air conditioning blow-out panels based on the sensor information stored in the storage section.

4. The air conditioning control system according to claim 3,
further comprising a controller (24), and
wherein the controller includes a display unit (24b) configured to display condition information generated based on the sensor information and an input unit (24a) configured to receive an input of information for generating the control command based on the condition information.

5. The air conditioning control system according to claim 3, wherein the sensor information includes at least one of: the number of people in an indoor space; a position(s) of a person/people in the indoor space; identification information of the person/people in the indoor space; temperature of the indoor space; humidity of the indoor space; air quality of the indoor space; a weather condition; the airflow direction of the air conditioning blow-out panel; the airflow volume of the air conditioning blow-out panel; the blow-out temperature of the air conditioning blow-out panel; an on/off state of a peripheral device; and outdoor temperature information.

6. The air conditioning control system according to claim 5,
wherein each of the air conditioning indoor units (50) further includes a blow-out temperature regulation section (55),
the control command generation section (22) is configured to generate a blow-out temperature control command for regulating the blow-out temperature of the air conditioning indoor unit in accordance with the outdoor temperature information, and
the blow-out temperature regulation section (55) is configured to regulate the blow-out temperature of the air conditioning indoor unit (50), in accordance with the blow-out temperature control command.

7. The air conditioning control system according to claim 5,
wherein the control command generation section (22) is configured to generate an airflow volume control command for regulating the airflow volume of the air conditioning indoor unit in accordance with the outdoor temperature information, and
the control unit (13) is configured to drive the driving unit (14) in accordance with the airflow volume control command.

8. The air conditioning control system according to claim 7, wherein the control command generation section (22) is configured to generate the airflow volume control command for reducing the airflow volume when the outdoor temperature is higher than indoor temperature whereas the control command generation section (22) is configured to generate the airflow volume control command for increasing the airflow volume when the outdoor temperature is equal to or lower than the indoor temperature.

9. The air conditioning control system according to claim 3,
wherein the plurality of air conditioning blow-out panels (10) are classified into a plurality of groups, and
the storage section (21) is configured to obtain and store the sensor information of any one of a single or plurality of air conditioning blow-out panels belonging to each of the groups.

10. An air conditioning control method for controlling a plurality of air conditioning blow-out panels connected to a network, each of the air conditioning blow-out panels being attachable/detachable to/from a main body of an air conditioning indoor unit, the air conditioning control method comprising the steps of:
obtaining sensor information of the plurality of air conditioning blow-out panels;
outputting the sensor information to an open network;
generating a control command with respect to each of the air conditioning blow-out panels based on the sensor information; and
transmitting the control command to each of the air conditioning blow-out panels through the network.
